(19) **Europäisches Patentamt / European Patent Office / Office européen des brevets**

(11) **EP 4 738 551 A2**

(12) **EUROPEAN PATENT APPLICATION**

(43) Date of publication:
06.05.2026 Bulletin 2026/19

(21) Application number: 26166362.9

(22) Date of filing: 20.03.2026

(51) International Patent Classification (IPC):
*H01M 50/121* (2021.01)    *H01M 50/131* (2021.01)
*H01M 50/122* (2021.01)    *H01M 50/503* (2021.01)

(52) Cooperative Patent Classification (CPC):
H01M 50/121; H01M 50/122; H01M 50/131;
H01M 50/503

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 21.03.2025 CN 202510344301

(71) Applicant: Ningde Amperex Technology Limited
Ningde, Fujian 352100 (CN)

(72) Inventors:
• LI, Rui
Ningde City, Fujian Province, 352100 (CN)
• LI, Lin
Ningde City, Fujian Province, 352100 (CN)
• GUO, Peipei
Ningde City, Fujian Province, 352100 (CN)
• HUANG, Zhiqi
Ningde City, Fujian Province, 352100 (CN)

(74) Representative: Kraus & Lederer PartGmbB
Thomas-Wimmer-Ring 15
80539 München (DE)

(54) **SECONDARY BATTERY, ELECTRONIC DEVICE, AND METHOD FOR MANUFACTURING SECONDARY BATTERY**

(57) A secondary battery includes a housing and an electrode assembly. The housing includes a packaging film. The packaging film is wrapped around to enclose the electrode assembly. The housing further includes an adhesive layer. The packaging film is coated with the adhesive layer on a surface facing away from the electrode assembly. The adhesive layer includes a resin compound. A tensile elongation at break of the packaging film is $\varphi_1$, and a tensile elongation at break of a part of the housing coated with the adhesive layer is $\varphi_2$, wherein $\varphi_2 < \varphi_1$.

FIG. 3

EP 4 738 551 A2

## Description

### TECHNICAL FIELD

This application relates to the technical field of batteries, and in particular, to a secondary battery, an electronic device, and a method for manufacturing the secondary battery.

### BACKGROUND

As a power supply of an electronic device, a secondary battery is the key to ensuring the normal use of the electronic device. When damaged by an external force, the secondary battery is prone to internal short circuits, resulting in safety problems such as thermal runaway.

### SUMMARY

Based on research, the applicant hereof finds that when a secondary battery is damaged by an external force, the packaging film is prone to stretch to an electrode plate under the action of the external force, thereby causing an aluminum layer of the packaging film to contact the electrode plate and consequently resulting in a short circuit. By coating the outer surface of the packaging film of a finished secondary battery with an adhesive layer that breaks at a tensile elongation at break lower than that of the packaging film, the housing includes both an adhesive layer and a packaging film, and the tensile elongation at break of the part, coated with the adhesive layer, of the housing is caused to be lower than the tensile elongation at break of the original packaging film. When the secondary battery is damaged by an external force, the housing can break earlier, and the stretch of the aluminum layer in the packaging film is reduced upon breakage, thereby reducing the probability of contact and short-circuiting between the aluminum layer and the electrode plate caused by excessive stretching.

An objective of this application is to provide a secondary battery, an electronic device, and a method for manufacturing the secondary battery to alleviate the short-circuiting problem of the secondary battery.

According to a first aspect of this application, a secondary battery is provided. The secondary battery includes a housing and an electrode assembly. The housing includes a packaging film. The packaging film is wrapped around to enclose the electrode assembly. The housing further includes an adhesive layer. The packaging film is coated with the adhesive layer on a surface facing away from the electrode assembly. The adhesive layer includes a resin compound. A tensile elongation at break of the packaging film is $\varphi_1$, and a tensile elongation at break of a part of the housing coated with the adhesive layer is $\varphi_2$, wherein $\varphi_2 < \varphi_1$.

In the above technical solution, the packaging film is coated with the adhesive layer on the surface facing away from the electrode assembly. The adhesive layer includes a resin compound. The housing includes the adhesive layer and the packaging film. The tensile elongation at break $\varphi_2$ of the part, coated with the adhesive layer, of the housing is less than the tensile elongation at break $\varphi_1$ of the packaging film. In this way, the housing breaks earlier when damaged by an external force. The stretch of the housing is relatively small, thereby reducing the probability that the housing stretches to the electrode plate under the action of the external force, and consequently reducing the probability of contact and short-circuiting between the aluminum layer of the housing and the electrode plate.

In some preferred embodiments, the adhesive layer includes a resin compound, thereby further reducing the tensile elongation at break of the part, coated with the adhesive layer, of the housing.

In some preferred embodiments, the resin compound includes at least one of epoxy resin or phenolic resin, thereby further reducing the tensile elongation at break of the part, coated with the adhesive layer, of the housing.

In some preferred embodiments, the adhesive layer further includes a curing agent of the resin compound. The curing agent can connect molecules or polymer chains of the resin compound to form a more stable reticular structure, thereby increasing the strength and hardness of the adhesive layer.

In some preferred embodiments, the curing agent is an amine compound or an acid anhydride compound, thereby making it convenient for the curing agent and the resin compound to form a more stable reticular structure, and consequently increasing the strength and hardness of the adhesive layer.

In some preferred embodiments, the curing agent includes at least one of aliphatic amine, aromatic amine, modified amine, or maleic anhydride, thereby making it convenient for the curing agent and the resin compound to form a more stable reticular structure, and consequently increasing the strength and hardness of the adhesive layer.

In some preferred embodiments, a mass percentage of the curing agent in the adhesive layer is 5% to 20%. When the mass percentage of the curing agent in the adhesive layer is less than 5%, the curing reaction between the resin compound and the curing agent is insufficient. Setting the mass percentage of the curing agent in the adhesive layer to be greater than or equal to 5% is conducive to improving the sufficiency of the curing reaction between the resin compound and the curing agent. When the mass percentage of the curing agent is greater than 20%, the curing agent is surplus, reduces the cohesive force of the housing, and increases the tensile elongation at break of the part, coated with the adhesive layer, of the housing, thereby resulting in a relatively prominent short-circuiting problem of the secondary battery. Setting the mass percentage of the curing agent in the adhesive layer to be less than or equal to 20% increases the cohesive force of the housing, and reduces the tensile elongation at break of the part, coated with the adhesive layer, of the housing, thereby alleviating the short-circuiting problem of the secondary battery.

In some preferred embodiments, the adhesive layer includes acrylate ester. The acrylate ester eliminates the need for a curing agent, thereby improving the ease of preparation of the adhesive layer.

In some preferred embodiments, along a length direction of the electrode assembly, the packaging film includes a first part, a second part, and a third part connected in sequence. Along a width direction of the electrode assembly, the second part includes a first sub-part, a second sub-part, and a third sub-part connected in sequence. The second sub-part is coated with the adhesive layer on a surface facing away from the electrode assembly. Along the length direction of the electrode assembly, a length of the first part is $L_1$, and a length of the third part is $L_2$, satisfying: $1\,mm \leq L_1 \leq 20\,mm$, and $1\,mm \leq L_2 \leq 20\,mm$. The second part is a middle region of the packaging film, the first part is a head region of the packaging film, and the third part is a tail region of the packaging film. Because the head region and the tail region of the packaging film are prone to collision and abrasion, the head region and the tail region of the packaging film are prone to be damaged if the tensile elongations at break of the head region and the tail region of the packaging film are reduced. By precluding the adhesive layer from being applied onto the surfaces of the first part and the third part on the sides facing away from the electrode assembly and setting the length of the first part in the length direction of the electrode assembly to fall within the range of 1 mm to 20 mm, this application reduces the probability of attachment of the adhesive layer to the first part, and reduces the probability of damage to the first part. By setting the length of the third part in the length direction of the electrode assembly to fall within the range of 1 mm to 20 mm, this application reduces the probability of attachment of the adhesive layer to the third part, and reduces the probability of damage to the third part. Along the width direction of the electrode assembly, the second sub-part is a middle region of the packaging film, the first sub-part and the third sub-part are side regions of the packaging film. Because the side regions of the packaging film are prone to collision and abrasion, the side regions of the packaging film are prone to be damaged if the tensile elongations at break of the side regions of the packaging film are reduced. By precluding the adhesive layer from being applied onto the surfaces of the first sub-part and the third sub-part on the sides facing away from the electrode assembly, this application reduces the probability of damage to the first sub-part and the third sub-part.

In some preferred embodiments, the first sub-part is coated with the adhesive layer on a surface facing away from the electrode assembly. The first sub-part is a side region of the packaging film. The side region is less prone to collision and abrasion than the head region and the tail region. Therefore, the first sub-part may be coated with the adhesive layer on the surface facing away from the electrode assembly, so as to reduce the tensile elongation at break of the first sub-part.

In some preferred embodiments, the third sub-part is coated with the adhesive layer on a surface facing away from the electrode assembly. The third sub-part is a side region of the packaging film. The side region is less prone to collision and abrasion than the head region and the tail region. Therefore, the third sub-part may be coated with the adhesive layer on the surface facing away from the electrode assembly, so as to reduce the tensile elongation at break of the third sub-part.

In some preferred embodiments, along the width direction of the electrode assembly, the first part includes a first corner portion, a first middle portion, and a second corner portion connected in sequence. The first middle portion is coated with the adhesive layer on a surface facing away from the electrode assembly. Along the width direction of the electrode assembly, a width of the first corner portion is $W_1$, and a width of the second corner portion is $W_2$, satisfying: $1\,mm \leq W_1 \leq 20\,mm$, and $1\,mm \leq W_2 \leq 20\,mm$. Because the corner of the packaging film is prone to collision and abrasion, the corner of the packaging film is prone to be damaged if the tensile elongation at break of the corner of the packaging film is reduced. By precluding the adhesive layer from being applied onto the surfaces of the first corner portion and the second corner portion on the sides facing away from the electrode assembly, this application reduces the probability of damage to the first corner portion and the second corner portion. By setting the length of the first corner portion in the width direction of the electrode assembly to fall within the range of 1 mm to 20 mm, this application reduces the probability of attachment of the adhesive layer to the first corner portion, and reduces the probability of damage to the first corner portion. By setting the length of the second corner portion in the width direction of the electrode assembly to fall within the range of 1 mm to 20 mm, this application reduces the probability of attachment of the adhesive layer to the second corner portion, and reduces the probability of damage to the second corner portion. In this context, the corner of the packaging film means a region near the intersection between adjacent edges of the packaging film. Because an angle is formed between two adjacent edges, the region near the intersection is referred to a corner. Using a cuboidal packaging film as an example, the outer surface of the packaging film is rectangular, and therefore, includes 4 corners. Each of the 4 corners is located near the intersection between two adjacent edges of the rectangle. The cuboidal packaging film includes a total of 8 corners.

In some preferred embodiments, along a thickness direction of the electrode assembly, a shape of a projection of the first corner portion may be one of a square, a triangle, a sector, a polygon, or an irregular shape, thereby meeting the requirements of diverse processing manners.

In some preferred embodiments, along a thickness direction of the electrode assembly, a shape of a projection of the second corner portion may be one of a square, a triangle, a sector, a polygon, or an irregular shape, thereby meeting the requirements of diverse processing manners.

In some preferred embodiments, along the width direction of the electrode assembly, the third part includes a third corner portion, a second middle portion, and a fourth corner portion connected in sequence. The second middle portion is coated with the adhesive layer on a surface facing away from the electrode assembly. Along the width direction of the electrode assembly, a width of the third corner portion is $W_3$, and a width of the fourth corner portion is $W_4$, satisfying: 1 mm $\leq W_3 \leq$ 20 mm, and 1 mm $\leq W_4 \leq$ 20 mm. By precluding the adhesive layer from being applied onto the surfaces of the third corner portion and the fourth corner portion on the sides facing away from the electrode assembly, this application reduces the probability of damage to the third corner portion and the fourth corner portion. By setting the length of the third corner portion in the width direction of the electrode assembly to fall within the range of 1 mm to 20 mm, this application reduces the probability of attachment of the adhesive layer to the third corner portion, and reduces the probability of damage to the third corner portion. By setting the length of the fourth corner portion in the width direction of the electrode assembly to fall within the range of 1 mm to 20 mm, this application reduces the probability of attachment of the adhesive layer to the fourth corner portion, and reduces the probability of damage to the fourth corner portion.

In some preferred embodiments, a tab is provided and connected to the electrode assembly. Along a thickness direction of the electrode assembly, a projection of the tab does not overlap a projection of the adhesive layer. By setting the projection of the tab not to overlap the projection of the adhesive layer along the thickness direction of the electrode assembly, this application reduces the probability that the thickness of the secondary battery is increased by the bulging of the housing caused by the tab.

In some preferred embodiments, the thickness of the adhesive layer is 1 $\mu$m to 60 $\mu$m. A greater thickness of the adhesive layer results in a lower tensile elongation at break of the part, coated with the adhesive layer, of the housing. When the thickness of the adhesive layer is less than 1 $\mu$m, the reduction in the tensile elongation at break of the part, coated with the adhesive layer, of the housing is not significant. By setting the thickness of the adhesive layer to be greater than or equal to 1 $\mu$m, this application further reduces the tensile elongation at break of the part, coated with the adhesive layer, of the housing. However, a greater thickness of the adhesive layer leads to a greater loss of the energy density of the secondary battery. When the thickness of the adhesive layer is 60 $\mu$m, the secondary battery exhibits a high pass rate in a nail penetration test. Further increasing the thickness of the adhesive layer does not significantly reduce the tensile elongation at break of the part, coated with the adhesive layer, of the housing, but results in a greater loss of the energy density of the secondary battery. Therefore, considering a trade-off between the tensile elongation at break of the part, coated with the adhesive layer, of the housing and the energy density of the secondary battery, the thickness of the adhesive layer is preferably less than or equal to 60 $\mu$m.

In some preferred embodiments, the adhesive layer further includes an inorganic filler. The inorganic filler increases the tensile strength of the adhesive layer, thereby improving the protection effect of the adhesive layer on the packaging film.

In some preferred embodiments, the inorganic filler includes glass fiber. A mass percentage of the glass fiber in the adhesive layer is 10% to 50%. When the inorganic filler in the adhesive layer is glass fiber, controlling the mass percentage of the inorganic filler to be greater than or equal to 10% can further increase the tensile strength of the adhesive layer. However, the higher the mass percentage of inorganic filler, the lower the uniformity of the adhesive layer applied. Therefore, considering a trade-off between the tensile strength and the uniformity of the adhesive layer applied, the mass percentage of the inorganic filler is preferably set to be less than or equal to 50%.

In some preferred embodiments, the inorganic filler includes silicon dioxide, and a mass percentage of the silicon dioxide in the adhesive layer is 5% to 30%. When the inorganic filler in the adhesive layer is silicon dioxide, controlling the mass percentage of the inorganic filler to be greater than or equal to 5% can further increase the tensile strength of the adhesive layer. However, the higher the mass percentage of inorganic filler, the lower the uniformity of the adhesive layer applied. Therefore, considering a trade-off between the tensile strength and the uniformity of the adhesive layer applied, the mass percentage of the inorganic filler is preferably set to be less than or equal to 30%.

In some preferred embodiments, 8.8% $\leq \varphi_1 - \varphi_2 \leq$ 59.8%. A larger value of $\varphi_1 - \varphi_2$ leads to a lower tensile elongation at break of the part, coated with the adhesive layer, of the housing. When $\varphi_1 - \varphi_2$ is less than 8.8%, the thickness of the adhesive layer is prone to be less than 1 $\mu$m, and the tensile elongation at break of the part, coated with the adhesive layer, of the housing is relatively high. Setting $\varphi_1 - \varphi_2$ to be greater than or equal to 8.8% can control the thickness of the adhesive layer to be greater than or equal to 1 $\mu$m, and can reduce the tensile elongation at break of the part, coated with the adhesive layer, of the housing. When the value of $\varphi_1 - \varphi_2$ is greater than 59.8%, the thickness of the adhesive layer is prone to be greater than 60 $\mu$m. Further increasing the value of $\varphi_1 - \varphi_2$ does not significantly reduce the tensile elongation at break of the part, coated with the adhesive layer, of the housing, but leads to a greater loss of the energy density of the secondary battery. Setting the value of $\varphi_1 - \varphi_2$ to be less than or equal to 66% can control the thickness of the adhesive layer to be less than or equal to 60 $\mu$m, and can increase the energy density of the secondary battery.

In some preferred embodiments, the packaging film includes a first polymer layer, a first metal layer, a second polymer layer, and a third polymer layer stacked in sequence. The third polymer layer is coated with the adhesive layer on a surface facing away from the second polymer layer. The third polymer layer includes polyamide to increase the strength of the packaging film.

According to a second aspect, this application further provides an electronic device, including the secondary battery disclosed in any one of the embodiments in the first aspect described above.

According to a third aspect, this application further discloses a method for manufacturing the secondary battery disclosed in any one of the embodiments in the first aspect described above. The method includes: providing the packaging film and the electrode assembly, and wrapping the packaging film around an outer surface of the electrode assembly; and providing the adhesive layer, and applying the adhesive layer onto the surface of the packaging film on the side facing away from the electrode assembly. The packaging film needs to be punched into a cavity before wrapping the electrode assembly. Therefore, the packaging film needs to exhibit a specified tensile elongation at break. By coating the packaging film with an adhesive layer after wrapping the electrode assembly, this application makes the housing include the adhesive layer and the packaging film, thereby reducing the tensile elongation at break of the part, coated with the adhesive layer, of the housing without affecting the tensile elongation at break of the packaging film before wrapping the electrode assembly, and enabling the packaging film to meet the cavity punching requirement.

Additional aspects and advantages of some embodiments of this application will be partly described or illustrated herein later or expounded through implementation of an embodiment of this application.

## BRIEF DESCRIPTION OF DRAWINGS

One or more embodiments are described illustratively with reference to corresponding drawings. The illustrative description does not constitute any limitation on the embodiments. Components marked with the same reference numeral in the drawings represent similar components. Unless otherwise expressly specified, the dimensions in the drawings do not constitute any scale limitation.

FIG. 1 is a schematic structural diagram of a secondary battery according to some embodiments of this application;
FIG. 2 is a schematic structural diagram of an electrode assembly according to some embodiments of this application;
FIG. 3 is a schematic structural diagram of a secondary battery according to some embodiments of this application;
FIG. 4 is a schematic structural diagram of a secondary battery according to some embodiments of this application;
FIG. 5 is a schematic structural diagram of a secondary battery according to some embodiments of this application;
FIG. 6 is a schematic structural diagram of a secondary battery according to some embodiments of this application;
FIG. 7 is a schematic structural diagram of a secondary battery according to some embodiments of this application;
FIG. 8 is a schematic structural diagram of a secondary battery according to some embodiments of this application;
FIG. 9 is a schematic structural diagram of a secondary battery according to some embodiments of this application;
FIG. 10 is a schematic structural diagram of a secondary battery according to some embodiments of this application; and
FIG. 11 is a schematic structural diagram of a packaging film and an adhesive layer according to some embodiments of this application.

List of reference signs:

100. secondary battery; 10. housing; 11. packaging film; 111. first polymer layer; 112. first metal layer; 113. second polymer layer; 114. third polymer layer; 115. first part; 1151. first corner portion; 1152. first middle portion; 1153. second corner portion; 116. second part; 1161. first sub-part; 1162. second sub-part; 1163. third sub-part; 117. third part; 1171. third corner portion; 1172. second middle portion; 1173. fourth corner portion; 12. adhesive layer; 20. electrode assembly; 20a. tab; 21. positive electrode plate; 22. negative electrode plate; 23. separator; X. length direction of electrode assembly; Y. width direction of electrode assembly; Z. thickness direction of electrode assembly.

## DETAILED DESCRIPTION

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of' means two or more.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

The term "perpendicular" is a description of an ideal state between two components. In the actual production or use state, one component may be approximately perpendicular to another component. For example, numerically, the term "perpendicular" may represent an angle of 90°+10° between two straight lines, or a dihedral angle of 90°+10° between two planes, or an angle of 90°+10° between a straight line and a plane. Two components described as "perpendicular" to each other may be not absolute straight lines or planes, but may be roughly straight lines or planes. An object is considered to be a "straight line" or "plane" if the overall extension direction of the object is a straight line or plane as viewed from a macro perspective.

To the extent that no mutual conflict occurs, the technical features described below in different embodiments of this application may be combined with each other.

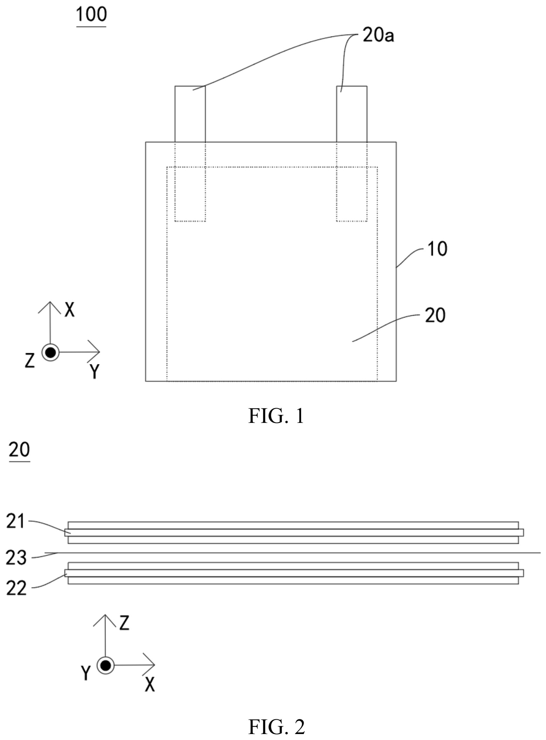

According to a first aspect, an embodiment of this application discloses a secondary battery 100. Referring to FIG. 1, the secondary battery 100 includes a housing 10, an electrode assembly 20, and a tab 20a. The housing 10 can accommodate the electrode assembly 20 and an electrolyte solution (not shown in the figure). The electrolyte solution in the housing 10 infiltrates the electrode assembly 20. The tab 20a is connected to the electrode assembly 20. The tab 20a extends out of the housing 10 in the length direction X of the electrode assembly 20 to assist the electrode assembly 20 in energy transmission with an external electronic device.

For the electrode assembly 20, referring to FIG. 2, FIG. 2 shows a stacked structure of the electrode assembly 20. The electrode assembly 20 includes a negative electrode plate 22, a positive electrode plate 21, and a separator 23. In the thickness direction Z of the electrode assembly 20, the positive electrode plate 21 and the negative electrode plate 22 are alternately stacked. A separator 23 is disposed between a positive electrode plate 21 and a negative electrode plate 22 adjacent to each other. The separator 23 is configured to dielectrically separate the positive electrode plate 21 from the negative electrode plate 22. In this embodiment of this application, the technical solution is described using an example in which the electrode assembly 20 is a stacked structure. In other embodiments, the electrode assembly 20 may be a wound structure or other structures. For example, the positive electrode plate 21, the separator 23, and the negative electrode plate 22 are stacked sequentially and then the stacked structure is wound to form a jelly-roll electrode assembly 20. The thickness direction Z of the electrode assembly 20 is perpendicular to the length direction X of the electrode assembly 20.

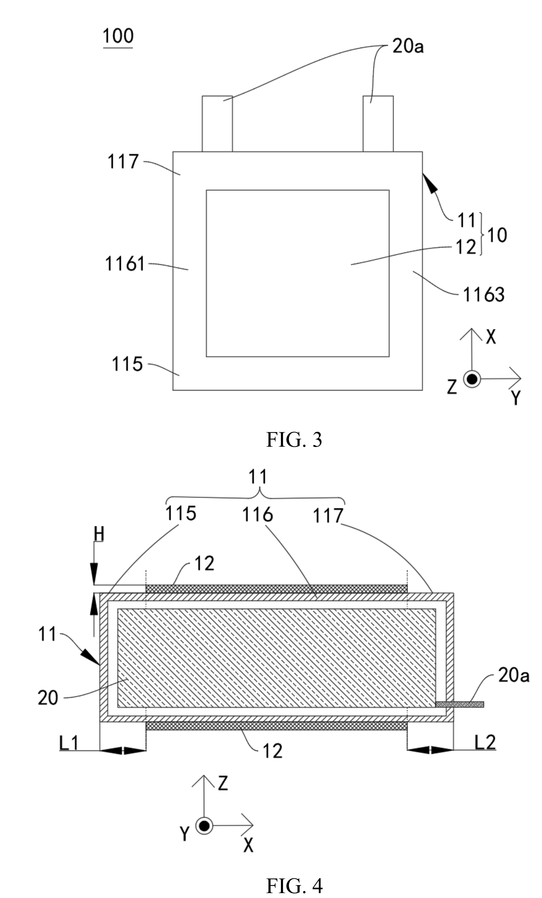

Referring to FIG. 3 and FIG. 4, the housing 10 includes a packaging film 11. The packaging film 11 is wrapped around to enclose the electrode assembly 20. When a secondary battery 100 is damaged by an external force, the packaging film 11 is prone to stretch to an electrode plate under the action of the external force, thereby causing an aluminum layer of the packaging film 11 to contact the electrode plate and consequently resulting in a short circuit.

To alleviate the above problem, in an embodiment of this application, the housing 10 further includes an adhesive layer 12. The packaging film 11 is coated with the adhesive layer 12 on a surface facing away from the electrode assembly 20. The adhesive layer 12 includes a resin compound. The tensile elongation at break of the packaging film 11 is $\varphi_1$, and the tensile elongation at break of a part of the housing 10 coated with the adhesive layer 12 is $\varphi_2$, wherein $\varphi_2 < \varphi_1$. The packaging film 11 is coated with the adhesive layer 12 on the surface facing away from the electrode assembly 20, the adhesive layer 12 includes the resin compound, the housing 10 includes the adhesive layer 12 and the packaging film 11, and the tensile elongation at break $\varphi_2$ of the part, coated with the adhesive layer 12, of the housing 10 is less than the tensile elongation at break $\varphi_1$ of the packaging film 11. In this way, the housing 10 breaks earlier when subjected to an external force. The stretch of the housing 10 is relatively small, thereby reducing the probability that the housing 10 stretches to the electrode plate under the action of the external force, and consequently reducing the probability of contact and short-circuiting between the aluminum layer of the housing 10 and the electrode plate.

In some embodiments, the thickness H of the adhesive layer 12 is 1 $\mu$m to 60 $\mu$m. A greater thickness of the adhesive layer 12 results in a lower tensile elongation at break of the part, coated with the adhesive layer 12, of the housing 10. When the thickness of the adhesive layer 12 is less than 1 $\mu$m, the reduction in the tensile elongation at break of the part, coated with the adhesive layer 12, of the housing 10 is not significant. By setting the thickness of the adhesive layer 12 to be greater than or equal to 1 $\mu$m, this application further reduces the tensile elongation at break of the part, coated with the adhesive layer 12, of the housing 10. However, a greater thickness of the adhesive layer 12 leads to a greater loss of the energy density of the secondary battery 100. When the thickness of the adhesive layer 12 is 60 $\mu$m, the secondary battery 100 exhibits a high pass rate in a nail penetration test. Further increasing the thickness of the adhesive layer 12 does not significantly reduce the tensile elongation at break of the part, coated with the adhesive layer 12, of the housing 10, but results in a greater loss of the energy density of the secondary battery 100. Therefore, considering a trade-off between the tensile elongation at break of the part, coated with the adhesive layer 12, of the housing 10 and the energy density of the secondary battery 100, the thickness of the adhesive layer 12 is preferably less than or equal to 60 $\mu$m.

In some embodiments, $3.2\% \leq \varphi_1 - \varphi_2 \leq 64.9\%$, and preferably, $8.8\% \leq \varphi_1 - \varphi_2 \leq 59.8\%$. In some embodiments, the value of $\varphi_1 - \varphi_2$ may be 3.2%, 5%, 8.8%, 10%, 15%, 20%, 24.9%, 25%, 29.4%, 30%, 35%, 40%, 45%, 50%, 54.3%, 55%, 59.8%, 60%, 64.9%, or a range formed by any two thereof, or a value falling within a range formed by any two thereof. A larger value of $\varphi_1 - \varphi_2$ leads to a lower tensile elongation at break of the part, coated with the adhesive layer 12, of the housing 10. When $\varphi_1 - \varphi_2$ is less than 8.8%, the thickness of the adhesive layer 12 is prone to be less than 1 $\mu$m, and the tensile elongation at break of the part, coated with the adhesive layer 12, of the housing 10 is relatively high. Setting $\varphi_1 - \varphi_2$ to be greater than or equal to 8.8% can control the thickness of the adhesive layer 12 to be greater than or equal to 1 $\mu$m, and can reduce the tensile elongation at break of the part, coated with the adhesive layer 12, of the housing 10. When the value of $\varphi_1 - \varphi_2$ is greater than 59.8%, the thickness of the adhesive layer 12 is prone to be greater than 60 $\mu$m. Further increasing the value of $\varphi_1 - \varphi_2$ does not significantly reduce the tensile elongation at break of the part, coated with the adhesive layer 12, of the housing 10, but results in a greater loss of the energy density of the secondary battery 100. Setting the value of $\varphi_1 - \varphi_2$ to be less than or equal to 66% can control the thickness of the adhesive layer 12 to be less than or equal to 60 $\mu$m, and can increase the energy density of the secondary battery 100.

In some embodiments, the adhesive layer 12 includes a resin compound, thereby further reducing the tensile elongation at break of the part, coated with the adhesive layer 12, of the housing 10.

In some embodiments, the resin compound includes at least one of epoxy resin or phenolic resin, thereby further reducing the tensile elongation at break of the part, coated with the adhesive layer 12, of the housing 10.

In some embodiments, the adhesive layer 12 further includes a curing agent of the resin compound. The curing agent can connect molecules or polymer chains of the resin compound to form a more stable reticular structure, thereby increasing the strength and hardness of the adhesive layer 12.

In some embodiments, the curing agent is an amine compound or an acid anhydride compound, thereby making it convenient for the curing agent and the resin compound to form a more stable reticular structure, and consequently increasing the strength and hardness of the adhesive layer 12.

In some embodiments, the curing agent includes at least one of aliphatic amine, aromatic amine, modified amine, or maleic anhydride, thereby making it convenient for the curing agent and the resin compound to form a more stable reticular structure, and consequently increasing the strength and hardness of the adhesive layer 12.

In some embodiments, the mass percentage of the curing agent in the adhesive layer 12 is 2% to 25%. Preferably, the mass percentage of the curing agent in the adhesive layer 12 is 5% to 20%. In some embodiments, the mass percentage of the curing agent in the adhesive layer 12 may be 2%, 5%, 8%, 8.3%, 10%, 13%, 15%, 18%, 20%, 23%, 25%, or a range formed by any two thereof, or a value falling within a range formed by any two thereof. When the mass percentage of the curing agent in the adhesive layer 12 is less than 5%, the curing reaction between the resin compound and the curing agent is insufficient. Setting the mass percentage of the curing agent in the adhesive layer 12 to be greater than or equal to 5% is conducive to improving the sufficiency of the curing reaction between the resin compound and the curing agent. When the mass percentage of the curing agent is greater than 20%, the curing agent is surplus, reduces the cohesive force of the housing 10, and increases the tensile elongation at break of the part, coated with the adhesive layer 12, of the housing 10, thereby resulting in a relatively prominent short-circuiting problem of the secondary battery 100. Setting the mass percentage of the curing agent in the adhesive layer 12 to be less than or equal to 20% increases the cohesive force of the housing 10, and reduces the tensile elongation at break of the part, coated with the adhesive layer 12, of the housing 10, thereby alleviating the short-circuiting problem of the secondary battery 100.

In some embodiments, the adhesive layer 12 includes acrylate ester. The acrylate ester eliminates the need for a curing agent, thereby improving the ease of preparation of the adhesive layer 12.

In some embodiments, referring to FIG. 3, FIG. 4, and FIG. 5, along the length direction X of the electrode assembly 20, the packaging film 11 includes a first part 115, a second part 116, and a third part 117 connected in sequence. Along the width direction Y of the electrode assembly 20, the second part 116 includes a first sub-part 1161, a second sub-part 1162, and a third sub-part 1163 connected in sequence. The second sub-part 1162 is coated with the adhesive layer 12 on a surface facing away from the electrode assembly 20. Along the length direction X of the electrode assembly 20, the length of the first part 115 is $L_1$, and the length of the third part 117 is $L_2$, satisfying: 1 mm $\leq L_1 \leq$ 20 mm, and 1 mm $\leq L_2 \leq$ 20 mm. The second part 116 is a middle region of the packaging film 11, the first part 115 is a head region of the packaging film, and the third part 117 is a tail region of the packaging film 11. Because the head region and the tail region of the packaging film 11 are prone to collision and abrasion, the head region and the tail region of the packaging film 11 are prone to be damaged if the tensile elongations at break of the head region and the tail region of the packaging film 11 are reduced. By precluding the adhesive layer 12 from being applied onto the surfaces of the first part 115 and the third part 117 on the sides facing away from the electrode assembly 20 and setting the length of the first part 115 in the length direction X of the electrode assembly 20 to fall within the range of 1 mm to 20 mm, this application reduces the probability of attachment of the adhesive layer 12 to the first part 115, and reduces the probability of damage to the first part 115. By setting the length of the third part 117 in the length direction X of the electrode assembly 20 to fall within the range of 1 mm to 20 mm, this application reduces the probability of attachment of the adhesive layer 12 to the third part 117, and reduces the probability of damage to the third part 117. Along the width direction Y of the electrode assembly 20, the second sub-part 1162 is a middle region of the packaging film 11, the first sub-part 1161 and the third sub-part 1163 are side regions of the packaging film 11. Because the side regions of the packaging film 11 are prone to collision and abrasion, the side regions of the packaging film 11 are prone to be damaged if the tensile elongations at break of the side regions of the packaging film 11 are reduced. By precluding the adhesive layer 12 from being applied onto the surfaces of the first sub-part 1161 and the third sub-part 1163 on the sides facing away from the electrode assembly 20, this application reduces the probability of damage to the first sub-part 1161 and the third sub-part 1163. The width direction Y of the electrode assembly 20, the thickness direction Z of the electrode assembly 20, and the length direction Y of the electrode assembly 20 are perpendicular to each other.

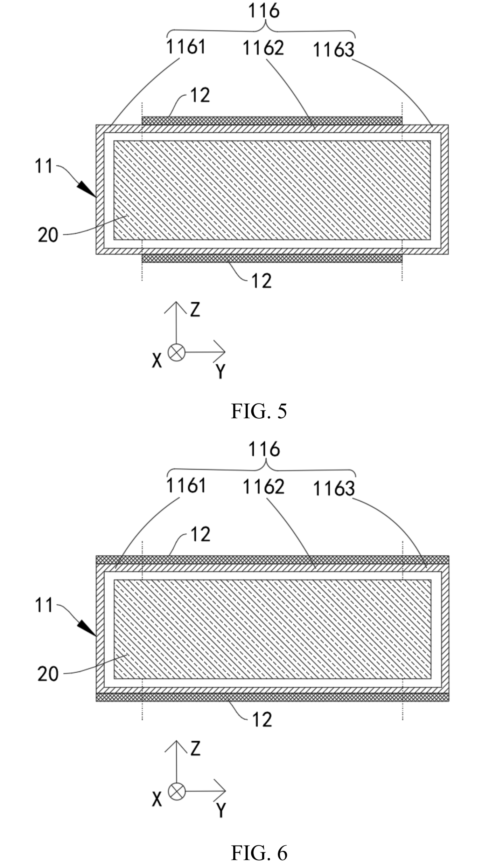

In some embodiments, referring to FIG. 6, the first sub-part 1161 is coated with the adhesive layer 12 on a surface facing away from the electrode assembly 20. The first sub-part 1161 is a side region of the packaging film 11. The side region is less prone to collision and abrasion than the head region and the tail region. Therefore, the first sub-part 1161 may be coated with the adhesive layer 12 on the surface facing away from the electrode assembly 20, so as to reduce the tensile elongation at break of the first sub-part 1161.

In some embodiments, the third sub-part 1163 is coated with the adhesive layer 12 on a surface facing away from the electrode assembly 20. The third sub-part 1163 is a side region of the packaging film 11. The side region is less prone to collision and abrasion than the head region and the tail region. Therefore, the third sub-part 1163 may be coated with the adhesive layer 12 on a surface facing away from the electrode assembly 20, so as to reduce the tensile elongation at break of the third sub-part 1163.

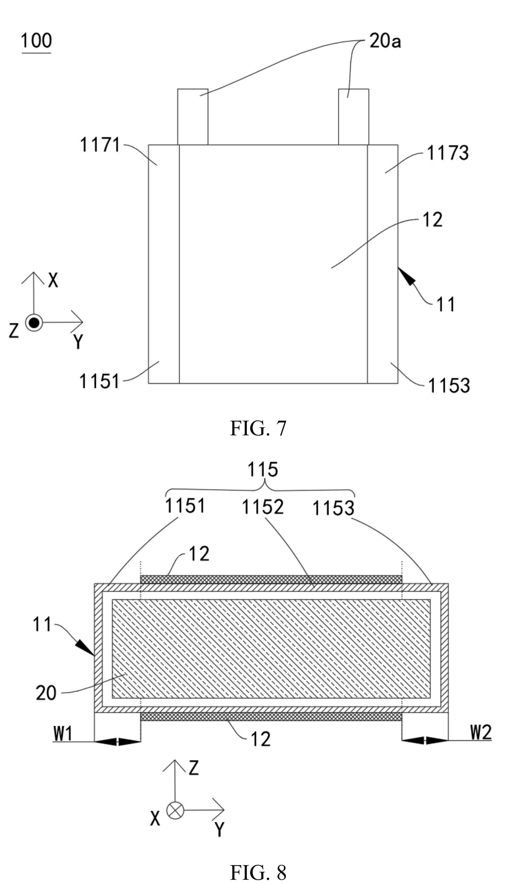

In some embodiments, referring to FIG. 7 and FIG. 8, along the width direction Y of the electrode assembly 20, the first part 115 includes a first corner portion 1151, a first middle portion 1152, and a second corner portion 1153 connected in sequence. The first middle portion 1152 is coated with the adhesive layer 12 on a surface facing away from the electrode assembly 20. Along the width direction Y of the electrode assembly 20, the width of the first corner portion 1151 is $W_1$, and the width of the second corner portion 1153 is $W_2$, satisfying: $1 \text{ mm} \leq W_1 \leq 20 \text{ mm}$, and $1 \text{ mm} \leq W_2 \leq 20 \text{ mm}$. Because the corner of the packaging film 11 is prone to collision and abrasion, the corner of the packaging film 11 is prone to be damaged if the tensile elongation at break of the corner of the packaging film 11 is reduced. By precluding the adhesive layer 12 from being applied onto the surfaces of the first corner portion 1151 and the second corner portion 1153 on the sides facing away from the electrode assembly 20, this application reduces the probability of damage to the first corner portion 1151 and the second corner portion 1153. By setting the length of the first corner portion 1151 in the width direction Y of the electrode assembly 20 to fall within the range of 1 mm to 20 mm, this application reduces the probability of attachment of the adhesive layer 12 to the first corner portion 1151, and reduces the probability of damage to the first corner portion 1151. By setting the length of the second corner portion 1153 in the width direction Y of the electrode assembly 20 to fall within the range of 1 mm to 20 mm, this application reduces the probability of attachment of the adhesive layer 12 to the second corner portion 1153, and reduces the probability of damage to the second corner portion 1153. In this context, the corner of the packaging film 11 means a region near the intersection between adjacent edges of the packaging film 11. Because an angle is formed between two adjacent edges, the region near the intersection is referred to a corner. Using a cuboidal packaging film 11 as an example, the outer surface of the packaging film 11 is rectangular, and therefore, includes 4 corners. Each of the 4 corners is located near the intersection between two adjacent edges of the rectangle. The cuboidal packaging film 11 includes a total of 8 corners.

In some embodiments, along a thickness direction Z of the electrode assembly 20, the shape of a projection of the first corner portion 1151 may be one of a square, a triangle, a sector, a polygon, or an irregular shape, thereby meeting the requirements of diverse processing manners.

In some embodiments, along a thickness direction Z of the electrode assembly 20, the shape of a projection of the second corner portion 1153 may be one of a square, a triangle, a sector, a polygon, or an irregular shape, thereby meeting the requirements of diverse processing manners.

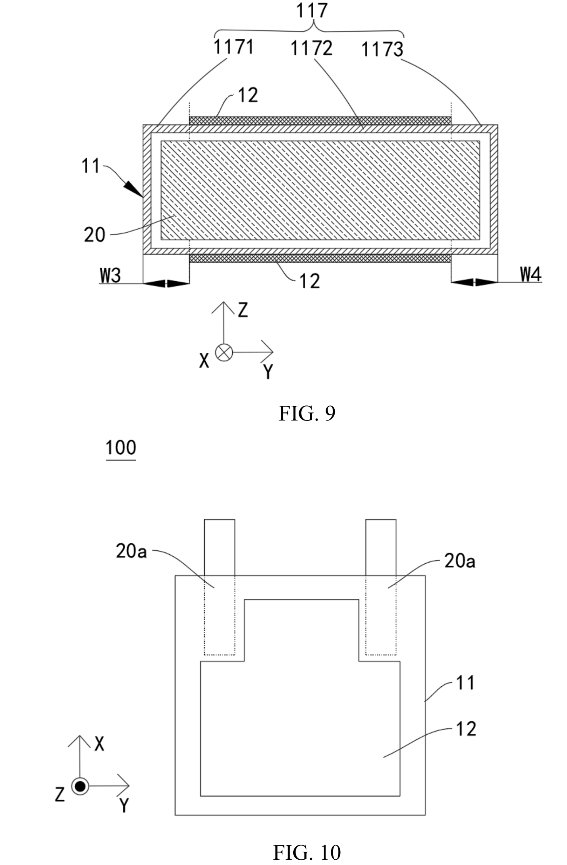

In some embodiments, referring to FIG. 7 and FIG. 9, along the width direction Y of the electrode assembly 20, the third part 117 includes a third corner portion 1171, a second middle portion 1172, and a fourth corner portion 1173 connected in sequence. The second middle portion 1172 is coated with the adhesive layer 12 on a surface facing away from the electrode assembly 20. Along the width direction Y of the electrode assembly 20, a width of the third corner portion 1171 is $W_3$, and a width of the fourth corner portion 1173 is $W_4$, satisfying: $1 \text{ mm} \leq W_3 \leq 20 \text{ mm}$, and $1 \text{ mm} \leq W_4 \leq 20 \text{ mm}$. By precluding the adhesive layer 12 from being applied onto the surfaces of the third corner portion 1171 and the fourth corner portion 1173 on the sides facing away from the electrode assembly 20, this application reduces the probability of damage to the third corner portion 1171 and the fourth corner portion 1173. By setting the length of the third corner portion 1171 in the width direction Y of the electrode assembly 20 to fall within the range of 1 mm to 20 mm, this application reduces the probability of attachment of the adhesive layer 12 to the third corner portion 1171, and reduces the probability of damage to the third corner portion 1171. By setting the length of the fourth corner portion 1173 in the width direction Y of the electrode assembly 20 to fall within the range of 1 mm to 20 mm, this application reduces the probability of attachment of the adhesive layer 12 to the fourth corner portion 1173, and reduces the probability of damage to the fourth corner portion 1173.

In some embodiments, referring to FIG. 10, a tab 20a is provided and connected to the electrode assembly 20. Along the thickness direction Z of the electrode assembly 20, a projection of the tab 20a does not overlap a projection of the adhesive layer 12. By setting the projection of the tab 20a not to overlap the projection of the adhesive layer 12 along the thickness direction Z of the electrode assembly 20, this application reduces the probability that the thickness of the secondary battery 100 is increased by the bulging of the housing 10 caused by the tab 20a.

In some embodiments, the adhesive layer 12 further includes an inorganic filler. The inorganic filler increases the tensile strength of the adhesive layer 12, thereby improving the protection effect of the adhesive layer 12 on the packaging film 11.

In some embodiments, the inorganic filler includes glass fiber. The mass percentage of the glass fiber in the adhesive layer 12 is 5% to 60%. Preferably, the mass percentage of the glass fiber in the adhesive layer 12 is 10% to 50%. In some embodiments, the mass percentage of the glass fiber in the adhesive layer 12 may be 5%, 10%, 15%, 20%, 25%, 30%, 35%, 40%, 45%, 50%, 55%, 60%, or a range formed by any two thereof, or a value falling within a range formed by any two thereof. When the inorganic filler in the adhesive layer 12 is glass fiber, controlling the mass percentage of the inorganic filler to be greater than or equal to 10% can further increase the tensile strength of the adhesive layer 12. However, a higher mass percentage of inorganic filler leads to lower uniformity of the adhesive layer 12 applied. Therefore, considering a trade-off between the tensile strength of the adhesive layer 12 and the uniformity of the adhesive layer 12 applied, the mass percentage of the inorganic filler is preferably set to be less than or equal to 50%.

In some embodiments, the inorganic filler includes silicon dioxide. The mass percentage of the silicon dioxide in the adhesive layer 12 is 2% to 40%. Preferably, the mass percentage of the silicon dioxide in the adhesive layer 12 is 5% to 30%. In some embodiments, the mass percentage of the silicon dioxide in the adhesive layer 12 may be 2%, 5%, 10%, 15%, 20%, 25%, 30%, 35%, 40%, or a range formed by any two thereof, or a value falling within a range formed by any two thereof. When the inorganic filler in the adhesive layer 12 is silicon dioxide, controlling the mass percentage of the inorganic filler to be greater than or equal to 5% can further increase the tensile strength of the adhesive layer 12. However, a higher mass percentage of inorganic filler leads to lower uniformity of the adhesive layer 12 applied. Therefore, considering a trade-off between the tensile strength of the adhesive layer 12 and the uniformity of the adhesive layer 12 applied, the mass percentage of the inorganic filler is preferably set to be less than or equal to 30%.

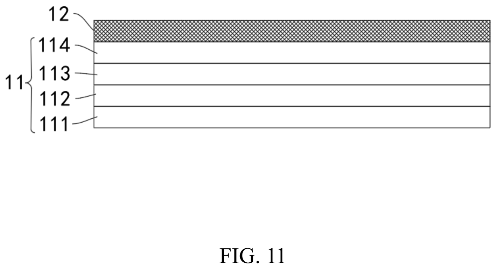

In some embodiments, referring to FIG. 9 and FIG. 11, the packaging film 11 includes a first polymer layer 111, a first metal layer 112, a second polymer layer 113, and a third polymer layer 114 stacked in sequence. The third polymer layer 114 is coated with the adhesive layer 12 on a surface facing away from the second polymer layer 113. The first polymer layer 111 includes polypropylene to facilitate sealing of the packaging film 11. The first metal layer 112 includes aluminum to enhance the plasticity of the packaging film 11. The second polymer layer 113 includes polyurethane to enhance the adhesive property of the second polymer layer 113. The third polymer layer 114 includes polyamide to increase the strength of the packaging film 11.

According to a second aspect of this application, an electronic device is further disclosed. The electronic device includes the secondary battery 100 disclosed in any one of the embodiments in the first aspect described above. The electronic device is not particularly limited in this application, and may be any electronic device known in the prior art. For example, the electronic device includes, but is not limited to, a Bluetooth headset, a mobile phone, a tablet, a notebook computer, an electric toy, an electric tool, an electric power cart, an electric vehicle, a ship, a spacecraft, and the like. The electric toy may include stationary or mobile electric toys, such as game console, electric car toy, electric ship toy, electric airplane toy, and the like. The spacecraft may include airplane, rocket, space shuttle, spaceship, and the like.

According to a third aspect, this application further discloses a method for manufacturing the secondary battery 100 disclosed in any one of the embodiments in the first aspect described above. The method includes: providing the packaging film 11 and the electrode assembly 20, and wrapping the packaging film 11 around an outer surface of the electrode assembly 20; and providing the adhesive layer 12, and applying the adhesive layer 12 onto the surface of the packaging film 11 on the side facing away from the electrode assembly 20. The packaging film 11 needs to be punched into a cavity before wrapping the electrode assembly 20. Therefore, the packaging film 11 needs to exhibit a specified tensile elongation at break. By coating the packaging film 11 with an adhesive layer 12 after wrapping the electrode assembly 20, this application makes the housing 10 include the adhesive layer 12 and the packaging film 11, thereby reducing the tensile elongation at break of the part, coated with the adhesive layer 12, of the housing 10 without affecting the tensile elongation at break of the packaging film 11 before the packaging film 11 wraps the electrode assembly 20, and enabling the packaging film 11 to meet the cavity punching requirement.

**Performance test**

1. Tensile test for the packaging film

Using a packaging film without an adhesive layer as a specimen, and cutting out a test specimen of 70 mm (length) × 15 mm (width) in size using a tensile-test-specific cutter. Fixing the test specimen between two grips of a GoTech tensile machine to measure the tensile strength of the specimen. Pulling the specimen at a speed of $50\pm0.5$ mm/min, with a tensile gauge length between the two grips being 50 mm.

Tensile elongation at break of the packaging film = (displacement of the specimen upon snap-off/initial length of the specimen) $\times$ 100%.

2. Tensile test for the housing

Using a housing as a specimen, where the housing includes a packaging film and an adhesive layer applied on a surface of the packaging film. Cutting out a test specimen of 70 mm (length) $\times$ 15 mm (width) in size using a tensile-test-specific cutter. Fixing the test specimen between two grips of a GoTech tensile machine to measure the tensile strength of the specimen. Pulling the specimen at a speed of $50\pm0.5$ mm/min, with a tensile gauge length between the two grips being 50 mm.

Tensile elongation at break of the part, coated with the adhesive layer, of the housing = (displacement of the specimen upon snap-off/initial length of the specimen) $\times$ 100%.

3. Nail penetration test

Fully charging a secondary battery as a specimen, placing the specimen flat on a test bench, and penetrating the specimen from the center of the specimen at a speed of 150+1.5 mm/s using a special-purpose nail with a diameter of 3 mm, a chamfer of 0.3, a tip length of 3 mm, and a nail body length greater than or equal to 100 mm until the specimen is fully pierced.
Criterion for pass of the test: The secondary battery does not catch fire or explode after completing the test.

**Embodiment 1**

**<Preparation of a positive electrode plate>**

Using aluminum foil as a positive current collector, and applying a lithium cobalt oxide slurry layer evenly onto a surface of the aluminum foil, where the slurry is a combination of 97.5 wt % lithium cobalt oxide ($LiCoO_2$), 1.0 wt % carbon black (Super P), and 1.5 wt% polyvinylidene fluoride (PVDF). Drying the slurry at 85 °C and then performing cold-pressing, cutting, and slitting to obtain a positive electrode plate.

**<Preparation of a negative electrode plate>**

Using copper foil as a negative current collector, and applying a graphite slurry layer evenly onto a surface of the copper foil, where the graphite slurry is a combination of 97.7 wt% artificial graphite, 1.3 wt% sodium carboxymethyl cellulose (CMC), and 1.0 wt% styrene-butadiene rubber (SBR). Drying the slurry at 85 °C and then performing cold-pressing, cutting, and slitting to obtain a negative electrode plate.

**<Preparation of an electrolyte solution>**

Mixing a lithium salt $LiPF_6$ and a nonaqueous organic solvent at a mass ratio of 8:92 to formulate a solution serving as an electrolyte solution of the secondary battery, where the nonaqueous organic solvent is a mixture of ethylene carbonate (EC), diethyl carbonate (DEC), propylene carbonate (PC), propyl propionate (PP), and vinylene carbonate (VC) mixed at a mass ratio of 20:30:20:28:2.

**<Preparation of a secondary battery>**

Welding tabs to the positive electrode plate and the negative electrode plate, and then stacking the positive electrode plate and the negative electrode plate together. Separating the positive electrode plate from the negative electrode plate using a polyethylene separator in between to obtain an electrode assembly.
Using a 103 $\mu$m-thick aluminum laminated film as a packaging film, wrapping the packaging film around the outer surface of the electrode assembly, and then performing top sealing, side sealing, inkjet marking, vacuum drying, electrolyte injection, and high-temperature standing, and then performing chemical formation and capacity grading to obtain a preliminary secondary battery.
Mixing 83.3 wt% epoxy resin and 8.3 wt% aliphatic amine (curing agent) in air for 3 to 5 minutes (the mass ratio of the 83.3 wt% epoxy resin to the 8.3 wt% aliphatic amine is approximately 10:1) to form a mixture. Applying the mixture onto a surface of the packaging film of the preliminary secondary battery, the surface facing away from the electrode assembly. Placing the packaging film into an 80 °C oven to cure for 1 hour to form an adhesive layer. The thickness of the adhesive layer is 10 $\mu$m. Along the length of the electrode assembly (the direction in which the tabs extend out of the housing), the packaging film includes a first part, a second part, and a third part connected in sequence. The length $L_1$ of the first part is 3 mm, and the length $L_2$ of the third part is 3 mm. The second part is coated with an adhesive layer on a surface facing away from the electrode assembly, but the first part and the third part are not coated with the adhesive layer. Along the width direction of the electrode assembly, the second part includes a first sub-part, a second sub-part, and a third sub-part connected in sequence. The length $L_3$ of the first sub-part is 3 mm, and the length $L_2$ of the third sub-part is 3 mm. The second sub-part is coated with the adhesive layer on a surface facing away from the electrode assembly, and the first sub-part and the third sub-part are not coated with the adhesive layer. The housing includes the adhesive layer and the packaging film. The secondary battery is 99 mm long and 66 mm wide.

The relevant parameters in Comparative Embodiment 1 and Embodiments 1 to 7 are shown in Table 1 below.

In Comparative Embodiment 1, the housing is the packaging film alone, without including the adhesive layer. The thickness of the adhesive layer varies in Embodiments 1 to 7.

**Table 1**

| | Thickness of adhesive layer | Tensile elongation at break of packaging film $\varphi_1$ | Tensile elongation at break of the part, coated with the adhesive layer, of the housing $\varphi_2$ | $\varphi_1$-$\varphi_2$ | Nail penetration test pass rate |
|---|---|---|---|---|---|
| Comparative Embodiment 1 | \ | 100.5% | 100.5% | 0% | 5% |
| Embodiment 1 | 10 $\mu$m | 100.5% | 71.1% | 29.4% | 65% |
| Embodiment 2 | 0.5 $\mu$m | 100.5% | 97.3% | 3.2% | 15% |
| Embodiment 3 | 1 $\mu$m | 100.5% | 91.7% | 8.8% | 30% |
| Embodiment 4 | 2 $\mu$m | 100.5% | 75.6% | 24.9% | 55% |
| Embodiment 5 | 50 $\mu$m | 100.5% | 46.2% | 54.3% | 90% |
| Embodiment 6 | 60 $\mu$m | 100.5% | 40.7% | 59.8% | 95% |
| Embodiment 7 | 70 $\mu$m | 100.5% | 35.6% | 64.9% | 95% |

Note: In Table 1, "\" indicates absence of the parameter.

As can be seen from Table 1 in conjunction with Comparative Embodiment 1 and Embodiments 1 to 7, the packaging film is coated with the adhesive layer on the surface facing away from the electrode assembly. The adhesive layer includes a resin compound. The housing includes the adhesive layer and the packaging film. The tensile elongation at break $\varphi_2$ of the part, coated with the adhesive layer, of the housing is less than the tensile elongation at break $\varphi_1$ of the packaging film. In this way, the housing breaks earlier when damaged by an external force. The stretch of the housing is relatively small, thereby reducing the probability that the housing stretches to the electrode plate under the action of the external force, and consequently reducing the probability of contact and short-circuiting between the aluminum layer of the housing and the electrode plate, and improving the nail penetration test pass rate.

As can be seen from Embodiments 1 to 7, a greater thickness of the adhesive layer results in a lower tensile elongation at break of the part, coated with the adhesive layer, of the housing, and leads to a higher pass rate of the secondary battery in a nail penetration test. When the thickness of the adhesive layer is less than 1 $\mu$m, the reduction in the tensile elongation at break of the part, coated with the adhesive layer, of the housing is not significant. By setting the thickness of the adhesive layer to be greater than or equal to 1 $\mu$m, this application further reduces the tensile elongation at break of the part, coated with the adhesive layer, of the housing, thereby further improving the pass rate of the secondary battery in a nail penetration test. However, a greater thickness of the adhesive layer leads to a greater loss of the energy density of the secondary battery. When the thickness of the adhesive layer is 60 $\mu$m, the secondary battery exhibits a high pass rate in a nail penetration test. Further increasing the thickness of the adhesive layer does not significantly increase the pass rate of the secondary battery in a nail penetration test, but results in a greater loss of the energy density of the secondary battery. Therefore, considering a trade-off between the pass rate of the secondary battery in a nail penetration test and the energy density of the secondary battery, the thickness of the adhesive layer is preferably less than or equal to 60 $\mu$m.

As can be seen from Embodiments 1 to 7, the tensile elongation at break of the packaging film is $\varphi_1$, and the tensile elongation at break of the part, coated with the adhesive layer, of the housing is $\varphi_2$. A larger value of $\varphi_1$-$\varphi_2$ leads to a higher pass rate of the secondary battery in a nail penetration test. When $\varphi_1$-$\varphi_2$ is less than 8.8%, the thickness of the adhesive layer is prone to be less than 1 $\mu$m, and the pass rate of the secondary battery in a nail penetration test is relatively low. Setting $\varphi_1$-$\varphi_2$ to be greater than or equal to 8.8% can control the thickness of the adhesive layer to be greater than or equal to 1 $\mu$m, and can increase the pass rate of the secondary battery in a nail penetration test. When the value of $\varphi_1$-$\varphi_2$ is greater than 59.8%, the thickness of the adhesive layer is prone to be greater than 60 $\mu$m. Further increasing the value of $\varphi_1$-$\varphi_2$ does not significantly increase the pass rate of the secondary battery in a nail penetration test, but probably leads to a greater loss of the energy density of the secondary battery. Setting the value of $\varphi_1$-$\varphi_2$ to be less than or equal to 66% can control the thickness of the adhesive layer to be less than or equal to 60 $\mu$m, and can increase the energy density of the secondary battery.

The relevant parameters in Embodiment 1 and Embodiments 8 to 11 are shown in Table 2 below.

The mass percentage of the curing agent in the adhesive layer varies in Embodiment 1 and Embodiments 8 to 11.

**Table 2**

| | Mass percentage of curing agent in adhesive layer | Tensile elongation at break of the part, coated with the adhesive layer, of the housing | Nail penetration test pass rate |
|---|---|---|---|
| Embodiment 1 | 8.3% | 71.1% | 65% |
| Embodiment 8 | 2% | 79.6% | 50% |
| Embodiment 9 | 5% | 75.3% | 60% |
| Embodiment 10 | 20% | 74.2% | 60% |
| Embodiment 11 | 25% | 78.4% | 55% |

As can be seen from Table 2 in conjunction with Embodiment 1 and Embodiments 8 to 11, when the mass percentage of the curing agent in the adhesive layer is 5% to 20%, the part, coated with the adhesive layer, of the housing exhibits a relatively low tensile elongation at break, and the secondary battery exhibits a relatively high pass rate in a nail penetration test. When the mass percentage of the curing agent in the adhesive layer is less than 5%, the curing reaction between the resin compound and the curing agent is insufficient. When the mass percentage of the curing agent is greater than 20%, the curing agent is surplus, reduces the cohesive force of the housing, and increases the tensile elongation at break of the part, coated with the adhesive layer, of the housing, thereby resulting in a lower pass rate of the secondary battery in a nail penetration test. Therefore, the mass percentage of the curing agent in the adhesive layer is preferably 5% to 20%.

The relevant parameters in Embodiment 1 and Embodiments 12 to 21 are shown in Table 3 below.

In Embodiments 12 to 16, the inorganic filler is glass fiber. The mass percentage of the inorganic filler in the adhesive layer varies in Embodiments 12 to 16.

The inorganic filler in Embodiments 17 to 21 is silicon dioxide. The mass percentage of the inorganic filler in the adhesive layer varies in Embodiments 17 to 21.

Table 3

| | Mass ratio of resin compound to curing agent in adhesive layer | Type of inorganic filler | Mass percentage of inorganic filler in adhesive layer | Tensile elongation at break of the part, coated with the adhesive layer, of the housing | Nail penetration test pass rate |
|---|---|---|---|---|---|
| Embodiment 1 | 10:1 | \ | 0% | 71.1% | 65% |
| Embodiment 12 | 10:1 | Glass fiber | 5% | 68.2% | 70% |
| Embodiment 13 | 10:1 | Glass fiber | 10% | 61.7% | 80% |
| Embodiment 14 | 10:1 | Glass fiber | 30% | 45.1% | 90% |
| Embodiment 15 | 10:1 | Glass fiber | 50% | 55.9% | 85% |
| Embodiment 16 | 10:1 | Glass fiber | 60% | 66.8% | 75% |

(continued)

| | Mass ratio of resin compound to curing agent in adhesive layer | Type of inorganic filler | Mass percentage of inorganic filler in adhesive layer | Tensile elongation at break of the part, coated with the adhesive layer, of the housing | Nail penetration test pass rate |
|---|---|---|---|---|---|
| Embodiment 17 | 10:1 | Silicon dioxide | 2% | 70.8% | 70% |
| Embodiment 18 | 10:1 | Silicon dioxide | 5% | 66.4% | 75% |
| Embodiment 19 | 10:1 | Silicon dioxide | 15% | 59.3% | 80% |
| Embodiment 20 | 10:1 | Silicon dioxide | 30% | 61.3% | 80% |
| Embodiment 21 | 10:1 | Silicon dioxide | 40% | 65.9% | 75% |
| Note: In Table 3, "\" indicates absence of the parameter. | | | | | |

As can be seen from Table 3 in conjunction with Embodiment 1 and Embodiments 12 to 21, controlling the adhesive layer to include the inorganic filler can increase the tensile strength of the adhesive layer, thereby improving the protection effect of the adhesive layer on the packaging film.

As can be seen from Embodiment 1 and Embodiments 12 to 16, when the inorganic filler in the adhesive layer is glass fiber, controlling the mass percentage of the inorganic filler to be greater than or equal to 10% can further increase the tensile strength of the adhesive layer. However, the higher the mass percentage of inorganic filler, the lower the uniformity of the adhesive layer applied. Therefore, considering a trade-off between the tensile strength and the uniformity of the adhesive layer applied, the mass percentage of the inorganic filler is preferably set to be less than or equal to 50%.

As can be seen from Embodiment 1 and Embodiments 17 to 21, when the inorganic filler in the adhesive layer is silicon dioxide, controlling the mass percentage of the inorganic filler to be greater than or equal to 5% can further increase the tensile strength of the adhesive layer. However, the higher the mass percentage of inorganic filler, the lower the uniformity of the adhesive layer applied. Therefore, considering a trade-off between the tensile strength and the uniformity of the adhesive layer applied, the mass percentage of the inorganic filler is preferably set to be less than or equal to 30%.

Described above are merely some embodiments of this application without limiting the patent scope of this application. Any and or all equivalent structural variations and equivalent process variations made by using the content of the specification and the drawings of this application, and the content hereof used directly or indirectly in any other related technical fields, still fall within the patent protection scope of this application.

**Claims**

1. A secondary battery (100), comprising a housing (10) and an electrode assembly (20), wherein the housing (10) comprises a packaging film (11), and the packaging film (11) is wrapped around to enclose the electrode assembly (20),
   **characterized in that** the housing (10) further comprises an adhesive layer (12), the packaging film (11) is coated with the adhesive layer (12) on a surface facing away from the electrode assembly (20); and the adhesive layer (12) comprises a resin compound, a tensile elongation at break of the packaging film (11) is $\varphi_1$, and a tensile elongation at break of a part of the housing (10) coated with the adhesive layer (12) is $\varphi_2$, wherein $\varphi_2 < \varphi_1$.

2. The secondary battery (100) according to claim 1, **characterized in that** the resin compound comprises at least one of epoxy resin or phenolic resin.

3. The secondary battery (100) according to claim 1 or 2, **characterized in that** the adhesive layer (12) further comprises a curing agent of the resin compound, a mass percentage of the curing agent in the adhesive layer (12) is 5% to 20%.

4. The secondary battery (100) according to claim 3, **characterized in that** the curing agent is an amine compound or an acid anhydride compound.

5. The secondary battery (100) according to claim 4, **characterized in that** the curing agent comprises at least one of aliphatic amine, aromatic amine, modified amine, or maleic anhydride.

6. The secondary battery (100) according to any one of claims 1 to 5, **characterized in that** the adhesive layer (12) comprises acrylate ester.

7. The secondary battery (100) according to any one of claims 1 to 6, **characterized in that**, along a length direction of the electrode assembly (X), the packaging film (11) comprises a first part (115), a second part (116), and a third part (117) connected in sequence; along a width direction of the electrode assembly (Y), the second part (116) comprises a first sub-part (1161), a second sub-part (1162), and a third sub-part (1163) connected in sequence; the second sub-part (1162) is coated with the adhesive layer (12) on a surface facing away from the electrode assembly (20); along the length direction of the electrode assembly (X), a length of the first part (115) is $L_1$, and a length of the third part (117) is $L_2$, satisfying: 1 mm $\leq L_1 \leq$ 20 mm, and 1 mm $\leq L_2 \leq$ 20 mm.

8. The secondary battery (100) according to claim 7, **characterized in that** the first sub-part (1161) is coated with the adhesive layer (12) on a surface facing away from the electrode assembly (20); and/or,

    the third sub-part (1163) is coated with the adhesive layer (12) on a surface facing away from the electrode assembly (20); and/or,
    along the width direction of the electrode assembly (Y), the third part (117) comprises a third corner portion (1171), a second middle portion (1172), and a fourth corner portion (1173) connected in sequence; the second middle portion (1172) is coated with the adhesive layer (12) on a surface facing away from the electrode assembly (20); along the width direction of the electrode assembly (Y), a width of the third corner portion (1171) is $W_3$, and a width of the fourth corner portion (1173) is $W_4$, satisfying: 1 mm $\leq W_3 \leq$ 20 mm, and 1 mm $\leq W_4 \leq$ 20 mm..

9. The secondary battery (100) according to claim 7 or 8, **characterized in that**, along the width direction of the electrode assembly (Y), the first part (115) comprises a first corner portion (1151), a first middle portion (1152), and a second corner portion (1153) connected in sequence; the first middle portion(1152) is coated with the adhesive layer (12) on a surface facing away from the electrode assembly (20); along the width direction of the electrode assembly (Y), a width of the first corner portion (1151) is $W_1$, and a width of the second corner portion (1153) is $W_2$, satisfying: 1 mm $\leq W_1 \leq$ 20 mm, and 1 mm $\leq W_2 \leq$ 20 mm.

10. The secondary battery (100) according to claim 9, **characterized in that**, along a thickness direction of the electrode assembly (Z), a shape of a projection of the first corner portion (1151) is one of a square, a triangle, a sector, a polygon, or an irregular shape; and/or, along a thickness direction of the electrode assembly (Z), a shape of a projection of the second corner portion (1153) is one of a square, a triangle, a sector, a polygon, or an irregular shape.

11. The secondary battery (100) according to any one of claims 1 to 10, further comprising a tab (20a) is provided and connected to the electrode assembly (20); and along a thickness direction of the electrode assembly (Z), a projection of the tab (20a) does not overlap a projection of the adhesive layer (12); and/or,

    a thickness of the adhesive layer (12) is 1 $\mu$m to 60 $\mu$m; and/or,

$$8.8\% \leq \varphi_1 - \varphi_2 \leq 59.8\%;$$

    and/or,
    packaging film (11) comprises a first polymer layer (111), a first metal layer (112), a second polymer layer (113), and a third polymer layer (114) stacked in sequence; the third polymer layer (114) is coated with the adhesive layer (12) on a surface facing away from the second polymer layer (113); and the third polymer layer (114) comprises polyamide.

12. The secondary battery (100) according to any one of claims 1 to 11, **characterized in that** the adhesive layer (12) further comprises an inorganic filler.

13. The secondary battery (100) according to claim 12, **characterized in that** the inorganic filler comprises glass fiber, and a mass percentage of the glass fiber in the adhesive layer (12) is 10% to 50%; or, the inorganic filler comprises silicon dioxide, and a mass percentage of the silicon dioxide in the adhesive layer (12) is 5% to 30%.

14. An electronic device, **characterized in that** the electronic device comprises the secondary battery (100) according to any one of claims 1 to 13.

15. A method for manufacturing the secondary battery (100) according to any one of claims 1 to 13, the method comprising:

provide the packaging film (11) and the electrode assembly (20), and wrapping the packaging film (11) around an outer surface of the electrode assembly (20); and
providing the adhesive layer (12), and applying the adhesive layer (12) onto the surface of the packaging film (11) on the side facing away from the electrode assembly (20).

<u>100</u>

20a

10

20

X

Z

Y

FIG. 1

<u>20</u>

21

23

22

Z

Y

X

FIG. 2

FIG. 3

FIG. 4

FIG. 5

FIG. 6

FIG. 7

FIG. 8

FIG. 9

100

FIG. 10

FIG. 11